# EUROPEAN PATENT APPLICATION

(11) **EP 4 697 740 A1**
(43) Date of publication of application: **18.02.2026**
(21) Application number: 24802737.7
(22) Date of filing: 18.04.2024
(51) Int. Cl.: H04Q 1/20

(54) **MONITORING METHOD AND NETWORK DEVICE**

(30) Priority: 06.05.2023 CN 202310500975
(71) Applicant: Huawei Technologies Co., Ltd., Shenzhen, Guangdong 518129 (CN)
(72) Inventor: GAO, Wei, Shenzhen, Guangdong 518129 (CN); MENG, Weitao, Shenzhen, Guangdong 518129 (CN); ZHAI, Shipeng, Shenzhen, Guangdong 518129 (CN); ZHAO, Xiaoke, Shenzhen, Guangdong 518129 (CN)
(74) Representative: Maiwald GmbH
(86) International application number: PCT/CN2024/088690
(87) International publication number: WO 2024/230452

(57) **Abstract**

This application provides a monitoring method and a network device. The network device includes a first component and a second component, the first component is connected to an external component of the network device, the second component is also connected to the external component, and the second component is connected to the first component. The method includes the following steps: The first component monitors the external component; in a process in which the first component monitors the external component, the second component monitors a status of the first component; and the second component monitors the external component if the second component determines that the first component is abnormal. The method can improve reliability of monitoring the external component by the network device, and reduce a security risk of the network device.

## Description

This application claims priority to Chinese Patent Application No. 202310500975.X, filed with the China National Intellectual Property Administration on May 6, 2023 and entitled "MONITORING METHOD AND NETWORK DEVICE", which is incorporated herein by reference in its entirety.

### TECHNICAL FIELD

This application relates to the field of computer technologies, and in particular, to a monitoring method and a network device.

### BACKGROUND

To ensure security of a network device (for example, a server, a switch, or a router), the network device monitors a status of an external component (for example, a fan, a power supply, or a temperature sensor) of the network device during running. The fan and the temperature sensor are used as examples. Because the network device generates a large amount of heat, to avoid abnormal running of the device due to an excessively high temperature, the temperature sensor and the fan are usually installed in the network device. The temperature sensor monitors a temperature of the network device, and when the temperature of the network device is high, a rotation speed of the fan is adjusted to dissipate heat from the network device.

Currently, the network device usually monitors the external component by using a component, for example, a central processing unit (central processing unit, CPU) or a baseboard management controller (baseboard management controller, BMC). The component configured to monitor the external component is susceptible to an anomaly. As a result, the external component cannot be monitored often, posing a significant security risk to the network device.

### SUMMARY

This application provides a monitoring method and a network device, to better monitor an external component of the network device, and improve reliability of monitoring the external component.

According to a first aspect, a monitoring method is provided, and is applied to a network device. The network device includes a first component and a second component, the first component is connected to an external component of the network device, the second component is also connected to the external component, and the second component is connected to the first component. The method includes the following steps: The first component monitors the external component; and when the first component is abnormal, the second component monitors the external component.

In the foregoing solution, the second component is disposed in the network device, so that when the first component (for example, a CPU or a BMC configured to monitor the external component) is abnormal, the second component monitors the external component, to improve reliability of monitoring the external component by the network device, and reduce a security risk of the network device.

In addition, in the foregoing solution, whether the first component is abnormal can be further monitored, so that when the first component is abnormal, operation and maintenance personnel can handle an anomaly in the first component in a timely manner.

In a possible implementation, the method provided in the first aspect further includes the following step: The second component determines, based on that a heartbeat signal sent by the first component is not received for a period of time, that the first component is abnormal.

In a possible implementation, the method provided in the first aspect further includes the following steps: When the second component monitors the external component, the second component receives the heartbeat signal sent by the first component; in this case, the second component stops monitoring the external component when determining that the first component returns to normal; and the first component monitors the external component.

In this implementation, when the first component returns to normal, a monitoring task of the external component can be restored to be performed by the first component.

To improve flexibility of the solution, in a possible implementation, the network device further includes a third component, the first component is connected to the external component via the third component, and the second component is connected to the first component via the third component. The method provided in the first aspect further includes the following step: The third component determines that the first component is abnormal, and notifies the second component that the first component is abnormal.

In a possible implementation, the third component includes a register, and the third component may specifically determine, in the following manner, that the first component is abnormal: The third component determines, based on that a heartbeat signal sent by the first component is not received for a period of time, that the first component is abnormal; and then the third component sets a value of the register to a first value, where the first value indicates that the first component is abnormal.

In a possible implementation, the third component may specifically notify, in the following manner, the second component that the first component is abnormal: The third component sends the first value of the register to the second component, where the first value indicates that the first component is abnormal; or the second component reads the first value of the register, where the first value indicates that the first component is abnormal.

To improve flexibility of the solution, in a possible implementation, when the third component includes the register, the method provided in the first aspect further includes the following steps: When the second component monitors the external component, the third component receives the heartbeat signal sent by the first component; in this case, the third component determines that the first component returns to normal, and sets the value of the register to a second value, where the second value indicates that the first component returns to normal; the second component stops monitoring the external component when determining that the value of the register is the second value; and the first component monitors the external component.

In a possible implementation, the first component is a CPU, and the second component is a BMC; or the first component is a BMC, and the second component is a CPU.

In this implementation, the technical solution provided in this application can be applied to the network device that monitors the external component by using the CPU or the BMC, to resolve a problem that the external component cannot be monitored when the CPU or the BMC in the network device of this type is abnormal.

In a possible implementation, the third component is a complex programmable logic device (complex programmable logic device, CPLD).

In a possible implementation, the network device is a white-box switch, and the external component includes any one or more of a fan, a power supply, a temperature sensor, a network interface, a flash memory, or a hard disk.

In this implementation, the technical solution provided in this application can be applied to the white-box switch, to resolve a problem that the external component cannot be monitored when a component that is configured to monitor the external component and that is in the white-box switch is abnormal.

According to a second aspect, a network device is provided. The network device includes a first component and a second component, the first component is connected to an external component of the network device, the second component is also connected to the external component, and the second component is connected to the first component. The first component is configured to monitor the external component; and when the first component is abnormal, the second component is configured to monitor the external component.

In a possible implementation, the second component is further configured to determine, based on that a heartbeat signal sent by the first component is not received for a period of time, that the first component is abnormal.

In a possible implementation, when the second component is configured to monitor the external component, the second component is further configured to receive the heartbeat signal sent by the first component, and stop monitoring the external component when determining that the first component returns to normal; and the first component is configured to monitor the external component.

In a possible implementation, the network device further includes a third component, the first component is connected to the external component via the third component, and the second component is connected to the first component via the third component. In the network device, the third component is configured to determine that the first component is abnormal and notify the second component that the first component is abnormal.

In a possible implementation, the third component includes a register. In the network device, the third component is configured to determine, based on that a heartbeat signal sent by the first component is not received for a period of time, that the first component is abnormal, and set a value of the register to a first value, where the first value indicates that the first component is abnormal.

In a possible implementation, the third component is configured to send the first value of the register to the second component, where the first value indicates that the first component is abnormal; or the second component is configured to read the first value of the register, where the first value indicates that the first component is abnormal.

In a possible implementation, when the second component is configured to monitor the external component, the third component is configured to receive the heartbeat signal sent by the first component; the third component is configured to determine that the first component returns to normal, and set the value of the register to a second value, where the second value indicates that the first component returns to normal; the second component is configured to stop monitoring the external component when determining that the value of the register is the second value; and the first component is configured to monitor the external component.

In a possible implementation, the first component is a CPU, and the second component is a BMC; or the first component is a BMC, and the second component is a CPU.

In a possible implementation, the third component is a CPLD.

In a possible implementation, the network device is a white-box switch, and the external component includes any one or more of a fan, a power supply, a temperature sensor, a network interface, a flash memory, or a hard disk.

For related beneficial effects and descriptions of any one of the network device provided in the second aspect and the implementations of the second aspect, refer to the related beneficial effects and descriptions of any one of the first aspect and the implementations of the first aspect. Details are not described herein again.

According to a third aspect, a monitoring system is provided. The monitoring system includes the foregoing network device.

According to a fourth aspect, a computer-readable storage medium is provided. The computer-readable medium stores a computer program (which may also be referred to as code or instructions). When the computer program is run on a network device, the network device is enabled to perform any one of the first aspect and the implementations of any one of the aspects.

According to a fifth aspect, a chip system is provided. The chip system may include a processor. The processor is coupled to a memory, and may be configured to perform the steps performed by the first component, the second component, or the third component in any one of the first aspect or the implementations of the first aspect. Optionally, the chip system further includes the memory. The memory is configured to store a computer program (which may also be referred to as code or instructions). The processor is configured to invoke the computer program from the memory and run the computer program, so that an apparatus in which the chip system is installed performs the steps performed by the first component, the second component, or the third component in any one of the first aspect or the implementations of the first aspect.

According to a sixth aspect, a computer program product is provided. The computer program product includes a computer program (which may also be referred to as code or instructions). When the computer program is run on a network device, the network device is enabled to perform any one of the first aspect and the implementations of the first aspect.

Based on the implementations provided in the foregoing aspects, implementations in this application may further be combined to provide more implementations.

### BRIEF DESCRIPTION OF DRAWINGS

FIG. 1 is a diagram of a structure of a network device according to this application;
FIG. 2 is a diagram of a structure of a network device according to this application;
FIG. 3 is a diagram of a structure of another network device according to this application;
FIG. 4 is a diagram of a structure of another network device according to this application;
FIG. 5 is a schematic flowchart of a monitoring method according to this application;
FIG. 6 is a schematic flowchart of another monitoring method according to this application; and
FIG. 7 is a diagram of a structure of another network device according to this application.

### DESCRIPTION OF EMBODIMENTS

The following clearly and completely describes technical solutions in embodiments of this application with reference to the accompanying drawings in embodiments of this application.

For ease of clearly understanding embodiments of this application, related terms are first explained.
(1) A white-box switch is a network switch based on open hardware and software, and allows a user to select different combinations of hardware and software to meet specific network requirements.
(2) An external component of a network device may also be referred to as an external device or a peripheral, is a component connected outside a host of the network device, and is a supplementary or auxiliary component connected to the network device. The external component can expand the network device. For example, the network device is a server. An external component of the server includes an input device such as a keyboard, an output device such as a display, and an external memory such as a solid-state drive (solid-state drive, SSD). For example, the network device is a switch. An external component of the switch includes a fan configured to dissipate heat for the switch, a temperature sensor configured to monitor a temperature of the switch, a power supply configured to supply power to the switch, a network interface configured to communicate with another device, a flash memory, a hard disk, or the like.
(3) A complex programmable logic device (complex programmable logic device, CPLD) is a digital integrated circuit used by a user to construct a logic function as required.

This application relates to a scenario in which the network device (for example, the server, the switch, or a router) needs to monitor the external component of the network device.

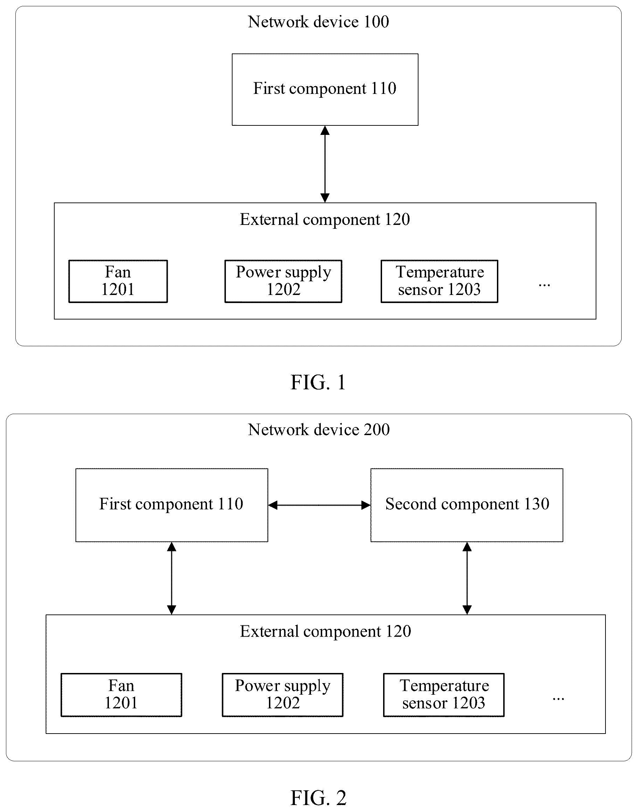

FIG. 1 is a diagram of a structure of a network device 100 according to this application. As shown in FIG. 1, the network device 100 includes a first component 110 and an external component 120. The first component 110 is connected to the external component 120, and the first component 110 is a CPU, a BMC, or the like. The external component 120 includes any one or more of a fan 1201, a power supply (which may also be referred to as a power supply unit (power supply unit, PSU)) 1202, a temperature sensor 1203, a network interface, a flash memory, or a hard disk. Optionally, the external component 120 may further include another device. This is not specifically limited in this application.

The first component 110 is responsible for monitoring the external component 120. The temperature sensor 1203 is used as an example. The first component 110 needs to obtain a temperature change of the network device 100 detected by the temperature sensor 1203, to perform heat dissipation on the network device 100 or use a low-temperature protection mechanism in a timely manner when a temperature is excessively high or low. The fan 1201 is used as an example, the first component 110 needs to dynamically adjust a rotation speed of the fan 1201 based on a temperature change of the network device 100, to implement temperature adjustment of the network device 100.

It should be understood that the network device 100 shown in FIG. 1 is merely an example. During actual application, the network device 100 may further include other or more components. FIG. 1 should not be considered as a specific limitation.

Currently, a problem in the network device 100 shown in FIG. 1 is that the first component 110 is susceptible to an anomaly. As a result, regularly, the external component 120 cannot be monitored, posing a significant security risk to the network device 100. For example, an excessively high temperature of the network device 100 causes a component fault on a mainboard of the network device 100.

To resolve the foregoing problem in the network device 100, this application provides a network device and a monitoring method. The following separately describes the network device and the monitoring method in detail with reference to corresponding accompanying drawings.

First, FIG. 2 is a diagram of a structure of a network device 200 according to this application. As shown in FIG. 2, the network device 200 includes a first component 110, an external component 120, and a second component 130. Both the first component 110 and the second component 130 are connected to the external component 120, and the first component 110 is connected to the second component 130.

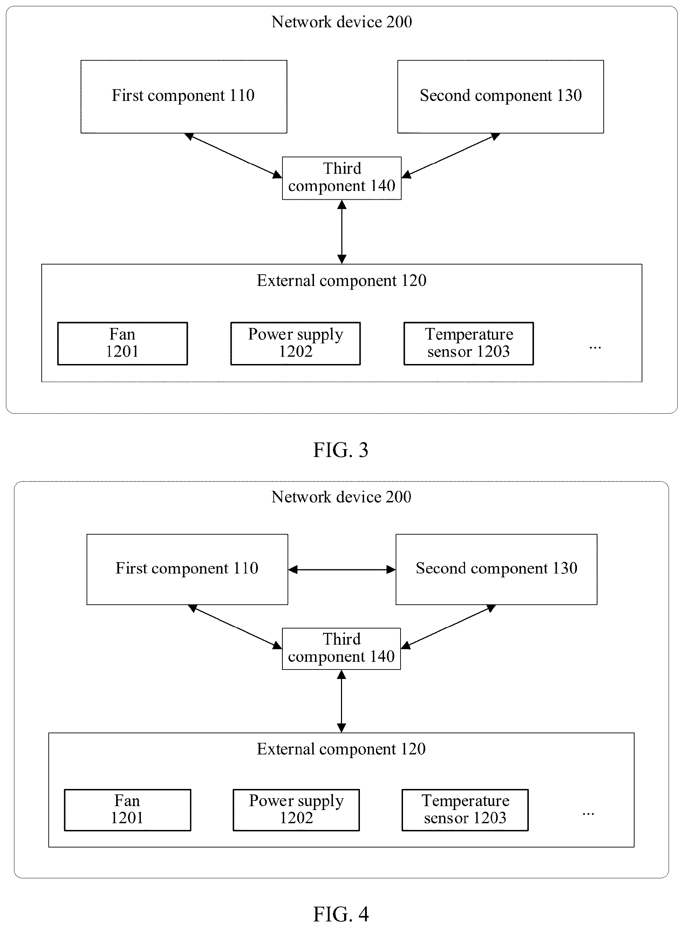

The foregoing connection relationship may be a direct connection, as shown in FIG. 2. Optionally, the connection relationship may alternatively be an indirect connection. As shown in FIG. 3, the first component 110 is indirectly connected to the second component 130 via a third component 140, the first component 110 is indirectly connected to the external component 120 via the third component 140, and the second component 130 is also indirectly connected to the external component 120 via the third component 140. Optionally, the connection relationship may alternatively be another connection relationship. As shown in FIG. 4, the first component 110 is directly connected to the second component 130, the first component 110 is indirectly connected to the external component 120 via the third component 140, and the second component 130 is also indirectly connected to the external component 120 via the third component 140. Connection relationships between the first component 110, the external component 120, and the second component 130 are not specifically limited in this application.

In a specific implementation, the third component 140 may be a CPLD, a programmable array logic (field programmable gate array, FPGA), or the like. This is not specifically limited in this application.

In a process in which the first component 110 monitors the external component 120, the second component 130 may monitor a status of the first component 110. When determining that the first component 110 is abnormal (for example, the first component 110 cannot continue to monitor the external component 120), the second component 130 starts to monitor the external component 120.

In a process in which the second component 130 monitors the external component 120, the second component 130 may continue to monitor the status of the first component 110; the second component 130 stops monitoring the external component 120 when determining that the first component 110 returns to normal; and the first component 110 continues to monitor the external component 120.

Optionally, when the second component 130 determines that the first component 110 returns to normal, the second component 130 may continue to monitor the external component 120. After returning to normal, the first component 110 may monitor a status of the second component 130; and the first component 110 monitors the external component 120 again when determining that the second component 130 is abnormal.

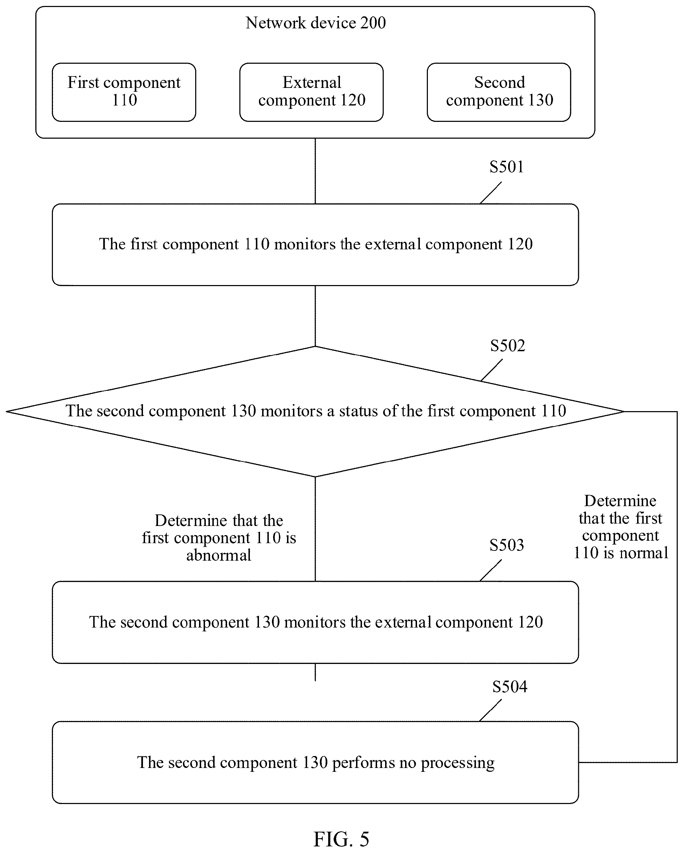

For ease of clearly understanding the process in which the network device 200 monitors the external component 120, the following provides detailed descriptions with reference to a schematic flowchart of a monitoring method shown in FIG. 5.

As shown in FIG. 5, the monitoring method provided in this application includes the following steps.

S501: A first component 110 monitors an external component 120.

A temperature sensor 1203 is used as an example. The first component 110 may obtain a temperature change of a network device 200 detected by the temperature sensor 1203, to perform heat dissipation on the network device 200 or use a low-temperature protection mechanism in a timely manner when a temperature is excessively high or low. A fan 1201 is used as an example. The first component 110 may dynamically calculate a rotation speed of the fan 1201 based on an obtained temperature change of the network device 200, and adjust the rotation speed of the fan 1201 based on the calculated rotation speed, to implement temperature adjustment of the network device 200. A power supply 1202 is used as an example. The first component 110 may obtain a voltage of the power supply 1202, to monitor whether the voltage of the power supply 1202 is excessively high or low.

S502: A second component 130 monitors a status of the first component 110; and the second component 130 performs S503 when determining that the first component 110 is abnormal; or the second component 130 performs S504 when determining that the first component 110 is normal.

Specifically, when the network device 200 is the network device shown in FIG. 2 or FIG. 4, the second component 130 may monitor the status of the first component 110 in any one of the following manner 1 or manner 2.

Manner 1: The second component 130 detects a running status of the first component 110 based on a heartbeat signal periodically sent by the first component 110. If the second component 130 receives no heartbeat signal sent by the first component 110 for a period of time, the second component 130 determines that the first component 110 is abnormal; otherwise, the second component 130 determines that the first component 110 is normal.

The foregoing period of time may be customized based on an actual scenario, and is not specifically limited herein.

Manner 2: The second component 130 detects a running status of the first component 110 based on a heartbeat signal periodically sent by the first component 110. If the second component 130 receives no heartbeat signal sent by the first component 110 for a specific quantity of consecutive times, the second component 130 determines that the first component 110 is abnormal; otherwise, the second component 130 determines that the first component 110 is normal.

The foregoing specific quantity of times may be customized based on an actual scenario, and is not specifically limited herein.

When the network device 200 is the network device shown in FIG. 3 or FIG. 4, the second component 130 may monitor the status of the first component 110 in any one of the following manner 3 or manner 4.

Manner 3: A third component 140 detects a running status of the first component 110 based on a heartbeat signal periodically sent by the first component 110. If the third component 140 receives no heartbeat signal sent by the first component 110 for a period of time, the third component 140 determines that the first component 110 is abnormal; otherwise, the third component 140 determines that the first component 110 is normal. After determining the status of the first component 110, the third component 140 may send a notification to the second component 130, to notify the second component 130 of the status of the first component 110.

Manner 4: The third component 140 detects a running status of the first component 110 based on a heartbeat signal periodically sent by the first component 110. If the third component 140 receives no heartbeat signal sent by the first component 110 for a specific quantity of consecutive times, the third component 140 determines that the first component 110 is abnormal; otherwise, the third component 140 determines that the first component 110 is normal. After determining the status of the first component 110, the third component 140 may send a notification to the second component 130, to notify the second component 130 of the status of the first component 110.

In the manner 3 or manner 4, a register may be disposed in the third component 140. The register has an initial value, for example, 0, or does not have any value in an initial state. When determining that the first component 110 is abnormal, the third component 140 sets a value of the register to a first value, for example, 1, where the first value indicates that the first component 110 is abnormal. The second component 130 may periodically read the value of the register in the third component 140. When the read value of the register is the first value, the second component 130 determines that the first component 110 is abnormal.

Optionally, the third component 140 may periodically send the value of the register to the second component 130. After determining that the first component 110 is abnormal and setting the value of the register to the first value, the third component 140 may send the first value of the register to the second component 130, so that the second component 130 determines, based on the first value of the register, that the first component 110 is abnormal.

It should be understood that the foregoing manner 1 to manner 4 are merely examples, and should not be considered as a specific limitation on an implementation in which the second component 130 monitors the status of the first component 110.

S503: The second component 130 monitors the external component 120.

S504: The second component 130 performs no processing.

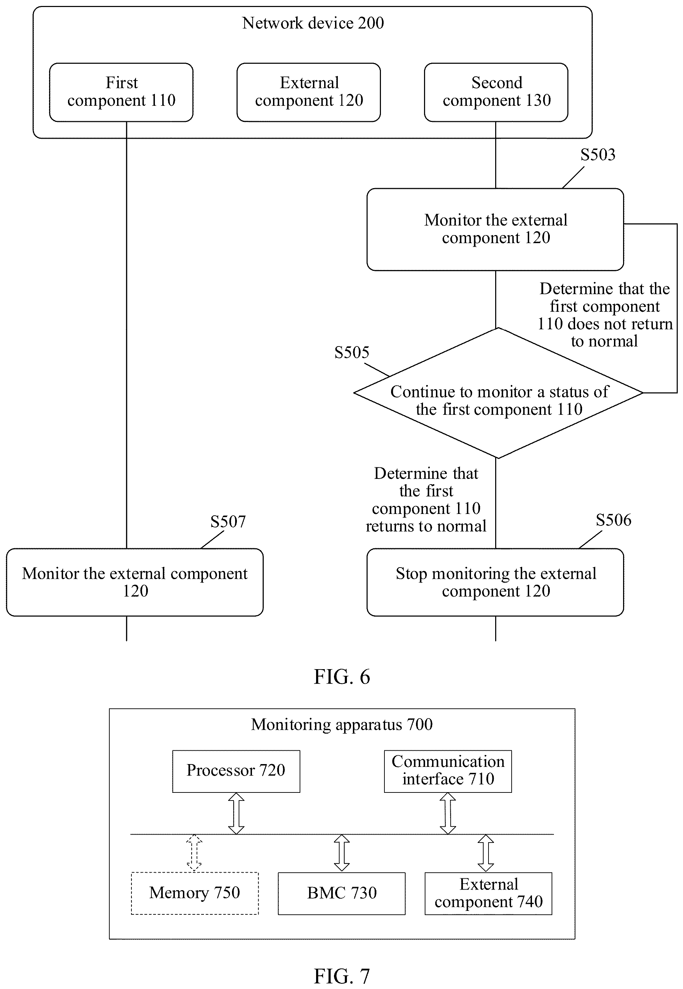

In a possible embodiment, as shown in FIG. 6, when the second component 130 performs S503 to monitor the external component 120, the second component 130 may further perform S505 to continue to monitor the status of the first component 110. When determining that the first component 110 returns to normal, the second component 130 performs S506 to stop monitoring the external component 120, and the first component 110 performs S507 to monitor the external component 120. When determining that the first component 110 does not return to normal, the second component 130 continues to perform S503 to monitor the external component 120.

Corresponding to the manner 1 or manner 2, if the second component 130 receives the heartbeat signal sent by the first component 110 when the second component 130 monitors the external component 120, the second component 130 determines that the first component 110 returns to normal; otherwise, the second component 130 determines that the first component 110 does not return to normal.

Corresponding to the manner 3 or manner 4, if the third component 140 receives the heartbeat signal sent by the first component 110 when the second component 130 monitors the external component 120, the third component 140 determines that the first component 110 returns to normal; otherwise, the third component 140 determines that the first component 110 does not return to normal. After determining the status of the first component 110, the third component 140 may send a notification to the second component 130, to notify the second component 130 of the status of the first component 110.

Specifically, when determining that the first component 110 returns to normal, the third component 140 may set the value of the register to a second value, for example, 2, where the second value indicates that the first component 110 returns to normal. The second component 130 may periodically read the value of the register in the third component 140. When the read value of the register is the second value, the second component 130 determines that the first component 110 returns to normal. When the read value of the register is the first value, the second component 130 determines that the first component 110 does not return to normal.

Optionally, the third component 140 may periodically send the value of the register to the second component 130. After determining that the first component 110 returns to normal and setting the value of the register to the second value, the third component 140 may send the second value of the register to the second component 130, so that the second component 130 determines, based on the second value of the register, that the first component 110 returns to normal.

In a possible embodiment, to further improve reliability of monitoring the external component 120 by the network device 200, in the network device 200 shown in FIG. 3 and FIG. 4, a component, for example, a fourth component 150 (not shown in FIG. 3 or FIG. 4), configured to monitor a status of the third component 140 may be disposed, and the fourth component 150 is connected to the first component 110, the second component 130, and the external component 120. When the fourth component 150 determines that the third component 140 is abnormal, the fourth component 150 replaces the third component 140 to communicate with the first component 110, the second component 130, and the external component 120.

It can be learned from the embodiment in FIG. 5 that, the second component 130 disposed in the network device may monitor whether the first component 110 is abnormal. When the second component 130 determines that the first component 110 is abnormal, the second component 130 may replace the first component 110 to monitor the external component 120. In this way, reliability of monitoring the external component 120 by the network device can be improved, and a security risk of the network device can be reduced.

In addition, in the embodiment in FIG. 5, the second component 130 may monitor whether the first component 110 is abnormal, so that when the first component 110 is abnormal, operation and maintenance personnel can handle an anomaly in the first component 110 in a timely manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement functions in the foregoing method embodiments, the first component 110, the second component 130, and the third component 140 include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 7 is a diagram of a structure of a possible monitoring apparatus 700 according to this application. As shown in FIG. 7, the monitoring apparatus 700 includes a processor 720, a communication interface 710, a BMC 730, and an external component 740. The processor 720, the communication interface 710, the BMC 730, and the external component 740 are coupled to each other. The processor 720 may be configured to perform the steps performed by the first component 110 in the foregoing method embodiments, or may be configured to perform the steps performed by the second component 130 in the foregoing method embodiments. When the processor 720 is configured to perform the steps performed by the first component 110 in the foregoing method embodiments, the BMC 730 is configured to perform the steps performed by the second component 130 in the foregoing method embodiments. When the processor 720 is configured to perform the steps performed by the second component 130 in the foregoing method embodiments, the BMC 730 is configured to perform the steps performed by the first component 110 in the foregoing method embodiments.

It may be understood that the communication interface 710 may be a transceiver or an input/output interface. Optionally, the monitoring apparatus 700 may further include a memory 750, configured to store instructions executed by the processor 720 and/or the BMC 730, store input data required for the processor 720 and/or the BMC 730 to run instructions, or store data generated after the processor 720 and/or the BMC 730 run/runs instructions. Optionally, the monitoring apparatus 700 may further include a CPLD 760 (not shown in FIG. 7), configured to perform the steps performed by the third component 140 in the foregoing method embodiments.

It may be understood that the processor 720 in this embodiment of this application may be a CPU, or may be another general-purpose processor, a digital signal processor (digital signal processor, DSP), an application-specific integrated circuit (application-specific integrated circuit, ASIC), an FPGA or another programmable logic device, a transistor logic device, a hardware component, or any combination thereof. The general-purpose processor may be a microprocessor, or may be any conventional processor.

The communication interface 710 may be a wired interface (for example, an Ethernet interface, an optical fiber interface, or an interface of another type (for example, an infiniBand interface)) or a wireless interface (for example, a cellular network interface or a wireless local area network interface), and is configured to communicate with another computing device or apparatus. When the communication interface 710 is a wired interface, the communication interface 710 may use protocols above TCP/IP, for example, a remote function call (remote function call, RFC) protocol, a simple object access protocol (simple object access protocol, SOAP), a simple network management protocol (simple network management protocol, SNMP), a common object request broker architecture (common object request broker architecture, CORBA) protocol, and a distributed protocol.

The memory 750 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 640 may alternatively be a volatile memory. The volatile memory may be a random access memory (random access memory, RAM), and is used as an external cache.

The external component 120 may include any one or more of a fan, a power supply, a temperature sensor, a network interface, a flash memory, a hard disk, or the like.

According to the method provided in this application, this application further provides a computer-readable storage medium. The computer-readable medium stores a program or instructions. When the program or the instructions are run on a computer, the computer is enabled to perform some or all of the steps in the method embodiments shown in FIG. 5 and FIG. 6.

According to the method provided in this application, this application further provides a chip system. The chip system may include a processor. The processor is coupled to a memory, and may be configured to perform some or all of the steps performed by the first component 110, the second component 130, or the third component 140 in the method embodiments shown in FIG. 5 and FIG. 6. Optionally, the chip system further includes the memory. The memory is configured to store a computer program (which may also be referred to as code or instructions). The processor is configured to invoke the computer program from the memory and run the computer program, so that an apparatus in which the chip system is installed performs some or all of the steps in the method embodiments shown in FIG. 5 and FIG. 6.

According to the monitoring method provided in this application, this application further provides a monitoring system. The monitoring system includes the foregoing network device 200.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory, an erasable programmable read-only memory (erasable programmable ROM, EPROM), an electrically erasable programmable read-only memory, a register, a hard disk, a solid-state drive (solid-state drive, SSD), a removable hard disk, a compact disc read-only memory (compact disc read-only memory, CD-ROM), or any other form of storage medium well-known in the art. For example, the storage medium is coupled to the processor, so that the processor can read information from the storage medium and write information into the storage medium. Certainly, the storage medium may be a component of the processor. The processor and the storage medium may be located in an application-specific integrated circuit (application-specific integrated circuit, ASIC). In addition, the ASIC may be located in a communication apparatus. Certainly, the processor and the storage medium may exist in the communication apparatus as discrete components.

All or some of the foregoing embodiments may be implemented by using software, hardware, firmware, or any combination thereof. When software is configured to implement embodiments, all or some of embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include both the volatile storage medium and the non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. "A plurality of" in this application refers to two or more than two. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects. "Including at least one of A, B, or C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions of embodiments of the present invention.

## Claims

1. A monitoring method, applied to a network device, wherein the network device comprises a first component and a second component, the first component is connected to an external component of the network device, the second component is connected to the external component, and the second component is connected to the first component; and the method comprises:
monitoring, by the first component, the external component; and
when the first component is abnormal, monitoring, by the second component, the external component.

2. The method according to claim 1, wherein the method further comprises:
determining, by the second component based on that a heartbeat signal sent by the first component is not received for a period of time, that the first component is abnormal.

3. The method according to claim 1 or 2, wherein the method further comprises:
when the second component monitors the external component, receiving, by the second component, the heartbeat signal sent by the first component;
stopping, by the second component, monitoring the external component when determining that the first component returns to normal; and
monitoring, by the first component, the external component.

4. The method according to claim 1, wherein the network device further comprises a third component, the first component is connected to the external component via the third component, and the second component is connected to the first component via the third component; and the method further comprises:
determining, by the third component, that the first component is abnormal; and
notifying, by the third component, the second component that the first component is abnormal.

5. The method according to claim 4, wherein the third component comprises a register, and the determining, by the third component, that the first component is abnormal comprises:
determining, by the third component based on that a heartbeat signal sent by the first component is not received for a period of time, that the first component is abnormal; and
setting, by the third component, a value of the register to a first value, wherein the first value indicates that the first component is abnormal.

6. The method according to claim 5, wherein the notifying, by the third component, the second component that the first component is abnormal comprises:
sending, by the third component, the first value of the register to the second component, wherein the first value indicates that the first component is abnormal; or
reading, by the second component, the first value of the register, wherein the first value indicates that the first component is abnormal.

7. The method according to claim 5 or 6, wherein the method further comprises:
when the second component monitors the external component, receiving, by the third component, the heartbeat signal sent by the first component;
determining, by the third component, that the first component returns to normal, and setting, by the third component, the value of the register to a second value, wherein the second value indicates that the first component returns to normal;
stopping, by the second component, monitoring the external component when determining that the value of the register is the second value; and
monitoring, by the first component, the external component.

8. The method according to any one of claims 1 to 7, wherein the first component is a central processing unit CPU, and the second component is a baseboard management controller BMC; or the first component is a BMC, and the second component is a CPU.

9. The method according to any one of claims 4 to 8, wherein the third component is a complex programmable logic device CPLD.

10. The method according to any one of claims 1 to 9, wherein the network device is a white-box switch, and the external component comprises any one or more of a fan, a power supply, a temperature sensor, a network interface, a flash memory, or a hard disk.

11. A network device, wherein the network device comprises a first component and a second component, the first component is connected to an external component of the network device, the second component is connected to the external component, and the second component is connected to the first component;
the first component is configured to monitor the external component; and
when the first component is abnormal, the second component is configured to monitor the external component.

12. The network device according to claim 11, wherein the second component is further configured to determine, based on that a heartbeat signal sent by the first component is not received for a period of time, that the first component is abnormal.

13. The network device according to claim 11 or 12, wherein
when the second component is configured to monitor the external component, the second component is further configured to receive the heartbeat signal sent by the first component;
the second component is configured to stop monitoring the external component when determining that the first component returns to normal; and
the first component is configured to monitor the external component.

14. The network device according to claim 11, wherein the network device further comprises a third component, the first component is connected to the external component via the third component, and the second component is connected to the first component via the third component;
the third component is configured to determine that the first component is abnormal; and
the third component is configured to notify the second component that the first component is abnormal.

15. The network device according to claim 14, wherein the third component comprises a register;
the third component is configured to determine, based on that a heartbeat signal sent by the first component is not received for a period of time, that the first component is abnormal; and
the third component is configured to set a value of the register to a first value, wherein the first value indicates that the first component is abnormal.

16. The network device according to claim 15, wherein
the third component is configured to send the first value of the register to the second component, wherein the first value indicates that the first component is abnormal; or
the second component is configured to read the first value of the register, wherein the first value indicates that the first component is abnormal.

17. The network device according to claim 15 or 16, wherein
when the second component is configured to monitor the external component, the third component is configured to receive the heartbeat signal sent by the first component;
the third component is configured to determine that the first component returns to normal, and set the value of the register to a second value, wherein the second value indicates that the first component returns to normal;
the second component is configured to stop monitoring the external component when determining that the value of the register is the second value; and
the first component is configured to monitor the external component.

18. The network device according to any one of claims 11 to 17, wherein the first component is a CPU, and the second component is a BMC; or the first component is a BMC, and the second component is a CPU.

19. The network device according to any one of claims 14 to 18, wherein the third component is a CPLD.

20. The network device according to any one of claims 11 to 19, wherein the network device is a white-box switch, and the external component comprises any one or more of a fan, a power supply, a temperature sensor, a network interface, a flash memory, or a hard disk.

21. A computer-readable storage medium, wherein the computer-readable medium stores a computer program, and when the computer program is run on a network device, the network device is enabled to perform the method according to any one of claims 1 to 10.
